# EUROPEAN PATENT APPLICATION

(11) **EP 0 560 528 A1**
(43) Date of publication of application: **15.09.1993**
(21) Application number: 93301582.8
(22) Date of filing: 02.03.1993
(51) Int. Cl.: B23K 20/00, B23K 31/00

(54) **Manufacture of components by superplastic forming**

(30) Priority: 07.03.1992 GB 9205034
(71) Applicant: BRITISH AEROSPACE PUBLIC LIMITED COMPANY, Farnborough, Hants. GU14 6YU (GB)
(72) Inventor: France, David, British Aerospace Defence Ltd, Balderstone, Lancashire BB2 7LF (GB); Bottomley, Ian, British Aerospace Defence Ltd, Balderstone, Lancashire BB2 7LF (GB); Brown, Gordon, British Aerospace Defence Ltd, Balderstone, Lancashire BB2 7LF (GB)
(74) Representative: Eastmond, John

(57) **Abstract**

A method of superplastically forming components is described whereby a hydrostatic back pressure (42) is exerted on the pack (2) during forming. The back pressure prevents the flanges (18) of the pack becoming raised from the bottom tool (14) of the heated form tool (4) due to any gap between the top tool (10) and the top surface (8) of the pack.

## Description

This invention relates to the manufacture of components by superplastic forming, and particularly to a method of improving the consistency of the shape of a formed component with the required shape.

Metals having superplastic characteristics, such as titanium and many of its alloys, have a composition and microstructure such that, when heated to within an appropriate range of temperature and when deformed within an appropriate range of strain rate, they exhibit the flow characteristics of a viscous fluid. The condition in which these characteristics are attained is known as superplasticity and, in this condition, the metals may be deformed so that they undergo elongations of several hundred percent without fracture or significant necking. This is due to the fine, uniform grain structures of superplastically formable metals which, when in the condition of superplasticity, allow grain boundary sliding by diffusion mechanisms so that the individual metal crystals slide relative to one another.

Diffusion bonding is often combined with superplastic forming to enable the manufacture, from multiple sheets of metal, of components of complex structure. The diffusion bonding process concerns the metallurgical joining of surfaces by applying heat and pressure which results in the co-mingling of atoms at the joint interface, the interface as a result becoming metallurgically undetectable. In order to manufacture structures of a complex nature it is often a requirement that the metals are not bonded at all their contacting areas, and therefore bond inhibitors (commonly known as stop-off or stopping-off materials) are applied to selected areas by, for example, a silk screen printing process.

Titanium in sheet form is often used in these processes because in its received state it has the characteristics needed for superplastic forming, and further because it will absorb its own oxide layer at high temperature in an inert atmosphere to provide an oxide-free surface. It is also particularly amenable to diffusion bonding under pressure. The optimum temperature for this self-cleaning is 930^{o}C which is also the optimum superplastic forming temperature. Thus, superplastic forming and diffusion bonding of titanium components can be carried out at the same time.

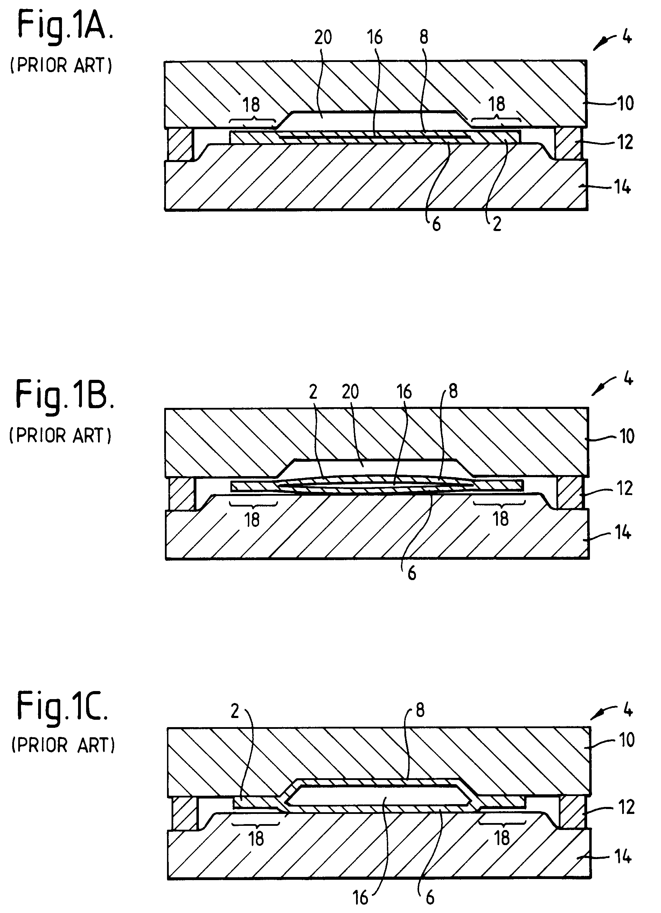

One known method of manufacture of components by diffusion bonding and superplastic forming will now be described with reference to Figures 1A, 1B and 1C of the accompanying drawings. Two sheets of superplastically formable and diffusion bondable material (such as titanium alloy) are selectively interlaid with stop-off material. The two sheets, which constitute a "pack", are placed in a diffusion bonding tool and pressed together at high temperature (such as 930^{o}C) to cause the sheets to be bonded together in areas where stop-off material has not been applied. The bonded pack 2 is removed from the diffusion bonding tool and placed in a heated form tool 4, see Figure 1A. The component to be formed has one surface 6 which is required to be completely flat, and therefore should not undergo superplastic forming. In order that this is possible, it is important that there is no significant gap between the forming, top face 8 of the pack and the top tool 10 of the form tool 4. To facilitate this, appropriately sized so-called "kiss bars" 12 are positioned between the top tool 10 and the bottom tool 14, the kiss bars 12 also providing accurate control over the depth of superplastic formation of the components by determining the distance between the top and bottom tools 10 and 14. To improve the accuracy and consistency of the height of the unformed pack 2, it may be subjected to chemical etching.

However, we have found that it is extremely difficult to ensure that the gap between the top surface 8 of the pack 2 and the top tool 10 is sufficiently small to prevent some forming of the bottom surface 6; this may be due, for example, to variations in the thickness of the materials comprising the pack 2 or variations in the depth of chemical etching over a series of packs all of which are formed at different times in the same mould tool.

As gas is introduced to the stopped off area 16 of the pack 2, the two sheets comprising the pack 2 are forced apart. Initially the pack 2 forms symmetrically (as shown in Figure 1B), thus pushing the flanges 18 of the pack 2 towards the corresponding areas of top tool 10. When contact between the flanges 18 and the top tool 10 is made, the stopped off area 16 of the pack 2 continues to superplastically form to occupy the cavity 20 in the top tool 10 (as shown in Figure 1C). The flanges 18 of the formed component are not co-planar with the rest of the bottom surface 6.

According to the present invention there is provided a method of manufacturing a component from two sheets of superplastically formable material including the steps of positioning a pack comprising two sheets of selectively diffusion bonded material in a heated form tool; and applying gas pressure between the sheets in regions which are not diffusion bonded, thereby superplastically forming the component characterised in that an outer surface of said pack is gas-tightedly sealed to an internal surface of said form tool, and an additional gas pressure is applied to said outer surface of said pack to cause an outer surface of said pack to be pushed against an internal surface of the form tool.

Conveniently said additional gas pressure is hydrostatic.

Optionally, said material is titanium alloy.

Preferably said outer surface of said pack is gas-tightedly sealed around its periphery to an internal surface of said form tool.

For a better understanding of the invention, an embodiment of it will now be described by way of example only, and with particular reference to the remainder of the accompanying drawings, in which:-
Figure 2 is a cross-sectional view through a bonding tool showing two sheets of titanium alloy being diffusion bonded;
Figures 3A, 3B and 3C are cross-sectional views through a form tool showing the superplastic forming of a component in accordance with the invention; and
Figures 4A and 4B are cross-sectional views through a form tool showing respectively a pack of complex shape prior to forming, and a magnified view of a selected area after forming.

To improve understanding of the drawings, like elements which appear in more than one figure are designated by the same reference number.

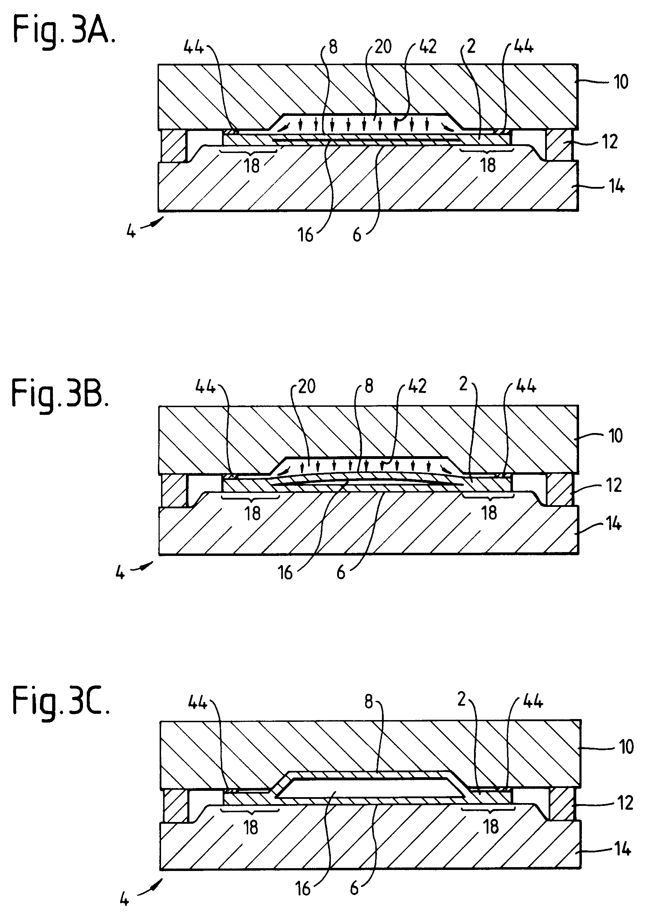

Referring initially to Figure 2, a conventional bonding tool is shown generally at 22. The top tool 23 of the diffusion bonding tool 22 together with the bottom tool 25 defines a cavity 27 in which two sheets 29 and 30 of titanium alloy are positioned. The cavity 27 is purged by an inert gas from a pipe 31 connected to a pressure pump (not shown). An inert gas also enters a space 33 defined by a lower surface of the top tool 23, a diaphragm 37 and seals 34 via a pipe 35. The gas exerts pressure (shown by vertical arrows 36) on the diaphragm 37 which is located above the two sheets 29 and 30 and is made of, for example, titanium or stainless steel (which is superplastically formable). The diaphragm 37 in turn presses on the sheets 29 and 30. Heaters (not shown) are positioned in the walls of the top tool 23 so that the sheets 29 and 30 can be sufficiently heated to enable diffusion bonding to occur between them, at what will be the flanges 18, when pressure is exerted by the gas from the pump via the pipe 31, diffusion bonding not occurring in region 16 due to the presence of stop-off material 40.

The sheets 29 and 30 thus form a pack 2.

The pack 2 is then placed in a form tool 4 as shown in Figure 3A. However, unlike the form tool used in previously known methods of forming, the top tool 10 of the form tool is modified to incorporate gas channels (not shown) through which an inert gas may be passed in order that a hydrostatic back pressure (as indicated by arrows 42) can be exerted on the top surface 8 of the pack 2 (see Figures 3A and 3B). A sealing strip 44 is positioned around the periphery of the top surface 8 such that it occupies any gap between the top tool and the top surface 8 of the pack 2, and provides a gas-tight seal between them. The hydrostatic back pressure keeps the pack 2 flat against the bottom tool 14 as the stopped-off area 16 is inflated via a gas inlet (not shown) by gas at a pressure of 350 psi, for example. The inflating gas pressure is greater than would be conventionally used during forming to take account of the back pressure which could be 300 psi, for example.

Figure 3C shows a component prior to removal from the tool and having been formed in accordance with the invention.

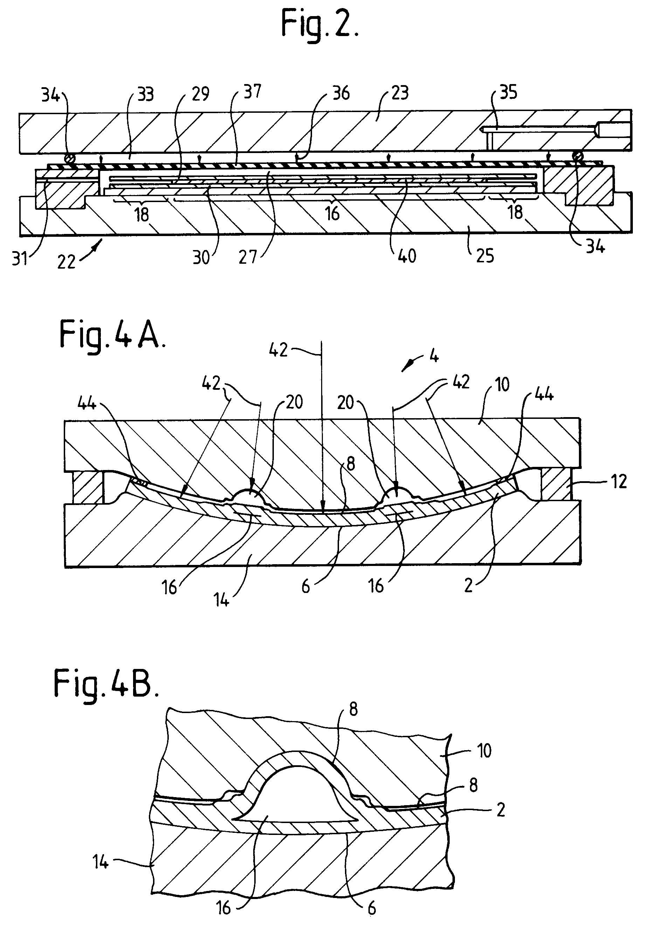

This technique is particularly advantageous when forming more complex components, such as illustrated in Figures 4A and 4B. The diffusion bonded pack 2 has been carefully chemically etched prior to positioning in the form tool 4 so that it will form to the required shape, the top tool 10 of which has, in turn, been machined to correspond to the chemically etched pattern. Where complicated shapes are required, some inaccuracies are virtually inevitable (whether in the machining or chemical etching), and these will leave gaps between the top tool 10 and the pack 2, thus causing the bottom surface 6 not to correspond exactly to the shape of the bottom tool 14 unless the sealing strips 44 and hydrostatic back pressure are employed in accordance with the method of the invention.

## Claims

1. A method of manufacturing a component from two sheets of superplastically formable material including the steps of positioning a pack comprising two sheets of selectively diffusion bonded material in a heated form tool; and applying gas pressure between the sheets in regions which are not diffusion bonded, thereby superplastically forming the component, characterised in that an outer surface (8) of said pack is gas-tightedly sealed to an internal surface (10) of said form tool, and an additional gas pressure (42) is applied to said outer surface (8) of said pack (2) to cause an outer surface (6) of said pack (2) to be pushed against an internal surface (14) of the form tool.

2. A method according to claim 1, characterised in that said additional gas pressure (42) is hydrostatic.

3. A method according to claim 1 or 2, characterised in that said material is titanium alloy.

4. A method according to claim 1, 2 or 3, characterised in that said outer surface (8) of said pack is gas-tightedly sealed (44) around its periphery to an internal surface (10) of said form tool.
